# EUROPEAN PATENT APPLICATION

(11) **EP 4 159 810 A1**
(43) Date of publication of application: **05.04.2023**
(21) Application number: 21818792.0
(22) Date of filing: 24.05.2021
(51) Int. Cl.: C08L 61/04, C08L 83/04, C09K 3/14, C08J 5/14, F16D 69/02

(54) **PHENOL RESIN COMPOSITION FOR FRICTION MATERIAL**

(30) Priority: 02.06.2020 JP 2020095929
(71) Applicant: Sumitomo Bakelite Co., Ltd., Shinagawa-ku Tokyo 140-0002 (JP)
(72) Inventor: MIFUKA Hajime, Tokyo 140-0002 (JP)
(74) Representative: Ter Meer Steinmeister & Partner
(86) International application number: PCT/JP2021/019520
(87) International publication number: WO 2021/246213

(57) **Abstract**

Provided is a phenol resin composition for a friction material, including a component (A) of a silicone resin having a softening point of 140°C or lower and a component (B) of a phenol resin.

## Description

### TECHNICAL FIELD

The present invention relates to a phenol resin composition for a friction material.

### BACKGROUND ART

Since a phenol resin has excellent characteristics such as heat resistance, mechanical strength, and moldability, in the related art, the phenol resin has been used as a molding material, or has been used for various industrial materials after undergoing processing such as adhesion and impregnation. In recent years, a demand for improved heat resistance and durability has been further increased in materials used at high temperatures, for example, heat-resistant materials such as a friction material for automobiles. As for base materials used for friction materials, aramid fibers and carbon fibers with high heat resistance have been widely used in place of inorganic fibers in the related art, such as glass. Therefore, phenol resins used as binders for the friction materials have also been required to be compatible with such fibers with high heat resistance and to have further improvement in heat resistance and durability. In order to meet these demands, various techniques for reforming (modifying) the phenol resin and improving heat resistance have been developed.

As a technique for improving wear resistance of the friction material, a friction material is disclosed in Patent Document 1 (Japanese Unexamined Patent Publication No. 2012-107205) . In the same document, it is disclosed that, in the friction material, by using, as a friction modifier, silane coupling agent-dispersed silicone rubber particles in which a silane coupling agent is dispersed in silicone rubber particles, it is possible to suppress falling off of the silicone rubber particles due to frictional impact during braking, and to obtain a friction material having good wear resistance (paragraph 0020) .

### RELATED DOCUMENT

### PATENT DOCUMENT

[Patent Document 1] Japanese Unexamined Patent Publication No. 2012-107205

### SUMMARY OF THE INVENTION

### TECHNICAL PROBLEM

In a case where the present inventors have studied on the technique disclosed in the above patent document, it has been clear that there is room for improvement in terms of providing a friction material having excellent water repellency.

### SOLUTION TO PROBLEM

The present inventors have found that a friction material having excellent water repellency can be obtained by using a combination of a phenol resin and a specific silicone resin, and have completed the present invention.

According to the present invention, there is provided a phenol resin composition for a friction material, which includes the following components (A) and (B).
(A) a silicone resin having a softening point of 140°C or lower
(B) a phenol resin

According to the present invention, there is provided a friction material including a cured product of the phenol resin composition for a friction material described above.

According to the present invention, there is provided a friction material including a cured product of a silicone resin having a softening point of 140°C or lower and a cured product of a phenol resin, in which the cured product of the silicone resin is present on a periphery of the cured product of the phenol resin.

According to the present invention, there is provided a method for producing a friction material, including a step of obtaining a mixture including a component (A) of a silicone resin having a softening point of 140°C or lower and a component (B) of a phenol resin and a step of heating the mixture to a temperature equal to or higher than the softening point to obtain a cured product including a crosslinked product of the component (A).

### ADVANTAGEOUS EFFECTS OF INVENTION

According to the present invention, it is possible to provide a friction material having excellent water repellency.

### DESCRIPTION OF EMBODIMENTS

Hereinafter, embodiments of the present invention will be described. Unless otherwise specified, a numerical range "to" indicates the above to the following, and includes both numerical values at both ends. In addition, in the present embodiments, a composition may include each component alone or in combination of two or more kinds.

### (Phenol resin composition for friction material)

In the present embodiment, a phenol resin composition for a friction material (hereinafter, also simply referred to as a "phenol resin composition" as appropriate) includes the following components (A) and (B).
(A) a silicone resin having a softening point of 140°C or lower
(B) a phenol resin

Since the phenol resin composition according to the present embodiment includes a combination of the above-described components, a cured product thereof has excellent water repellency. The reason for this is not necessarily clear, but is considered as follows. That is, in a process of obtaining a cured product by thermoforming, which is used as the friction material, in a case where the composition is heated at a temperature equal to or higher than softening points of the component (A) and the component (B), the component (A) and the component (B) melt. Since the component (A) and the component (B) undergo phase separation and the component (A) having excellent water repellency is present on a surface of the cured product, it is considered that the obtained friction material is imparted with water repellency.

### (Component (A))

The component (A) is a silicone resin having a softening point of 140°C or lower.

From the viewpoint of improving solidification of the cured product, the softening point of the component (A) is preferably 25°C or higher, more preferably 30°C or higher, and still more preferably 35°C or higher.

In addition, from the viewpoint of improving water repellency of the cured product, the softening point of the component (A) is 140°C or lower, preferably 120°C or lower and more preferably 100°C or lower.

The component (A) is a polyorganosiloxane polymer obtained by cohydrolysis of an organosilane compound and subsequent condensation reaction, and examples thereof include a polymer having at least one group selected from the group consisting of a methylphenyl group and a methyl group. The component (A) is preferably at least one selected from the group consisting of a methylphenyl group-containing silicone resin and a methyl group-containing silicone resin, and more preferably a methylphenyl group-containing silicone resin. For example, a commercially available product can be used as the silicone resin.

From the viewpoint of improving the water repellency of the cured product, a content of the component (A) in the phenol resin composition is preferably 1 part by mass or more, more preferably 1.5 parts by mass or more, and still more preferably 2 parts by mass or more with respect to 100 parts by mass of the component (B).

In addition, from the viewpoint of improving mechanical strength of the friction material, the content of the component (A) in the phenol resin composition is preferably 500 parts by mass or less, more preferably 100 parts by mass or less, and still more preferably 50 parts by mass or less with respect to 100 parts by mass of the component (B) .

### (Component (B))

The component (B) is a phenol resin. A novolac-type phenol resin is preferably used as the component (B). The novolac-type phenol resin is a phenol resin obtained by reacting phenols and aldehydes under an acid catalyst. Examples of the novolac-type phenol resin include phenol novolac-type resin, cresol novolac-type resin, resorcinol novolac-type resin, xylenol novolac-type resin, alkylphenol novolac-type resin, naphthol novolac-type resin, bisphenol A novolac-type resin, phenol aralkyl novolac-type resin, phenol diphenyl aralkyl novolac-type resin, phenol naphthalene novolac-type resin, phenol dicyclopentadiene novolac-type resin, and novolac-type modified phenol resin with cashew nut oil, terpene, tall oil, rosin, rubber, and the like.

Examples of the phenols used to synthesize the novolac-type phenol resin include phenol; cresols such as o-cresol, m-cresol, and p-cresol; xylenols such as 2,3-xylenol, 2,4-xylenol, 2,5-xylenol, 2,6-xylenol, 3,4-xylenol, and 3,5-xylenol; ethylphenols such as o-ethylphenol, m-ethylphenol, and p-ethylphenol; isopropylphenol; butylphenols such as butylphenol and p-tert-butylphenol; alkylphenols such as p-tert-amylphenol, p-octylphenol, p-nonylphenol, and p-cumylphenol; monovalent phenol substitutions such as p-phenylphenol, aminophenol, nitrophenol, dinitrophenol, trinitrophenol, and cardanol; monohydric phenols such as 1-naphthol and 2-naphthol; polyhydric phenols such as resorcin, alkylresorcin, pyrogallol, catechol, alkylcatechol, hydroquinone, alkylhydroquinone, phloroglucin, bisphenol A, bisphenol F, bisphenol S, and dihydroxynaphthalin; and oils and fats such as cashew nut oil containing phenol compounds. As the phenols, one type may be used alone, or two or more types may be used in combination.

Examples of the aldehydes used to synthesize the novolac-type phenol resin include formaldehyde, paraformaldehyde, trioxane, acetaldehyde, propionaldehyde, polyoxymethylene, chloral, hexamethylenetetramine, furfural, glyoxal, n-butylaldehyde, caproaldehyde, allylaldehyde, benzaldehyde, crotonaldehyde, acrolein, tetraoxymethylene, phenyl acetaldehyde, o-tolualdehyde, salicylaldehyde, and paraxylenedimethyl ether. As the aldehydes, one type may be used alone, or two or more types may be used in combination.

In addition, preferred examples of the combination of the phenols and the aldehydes include a combination of phenol and formaldehyde.

In the method for synthesizing the novolac-type phenol resin by reacting the above-described phenols and aldehydes, a molar ratio (aldehydes/phenols) of the aldehydes to the phenols is preferably 0.5 to 0.9 and more preferably 0.55 to 0.87. By setting the molar ratio within the above-described range, a phenol resin having a desired molecular weight can be obtained without gelation of the obtained reaction product.

Examples of the acid catalyst used to synthesize the novolac-type phenol resin include organic acids such as oxalic acid, mineral acids such as hydrochloric acid, sulfuric acid, and phosphoric acid, diethylsulfate, paratoluenesulfonic acid, and paraphenolsulfonic acid.

From the viewpoint of making physical properties of the cured product more preferred, a content of the component (B) in the phenol resin composition is preferably 2% by volume or more, more preferably 5% by volume or more, and still more preferably 10% by volume or more with respect to the entire phenol resin composition.

In addition, from the viewpoint of improving water repellency, the content of the component (B) in the phenol resin composition is preferably 50% by volume or less, more preferably 40% by volume or less, still more preferably 30% by volume or less, and even more preferably 20% by volume or less with respect to the entire phenol resin composition.

In addition, with respect to the total of 100 parts by mass of the components (A) and (B), and a curing agent described later in the phenol resin composition, the content of the component (B) in the phenol resin composition is preferably 50 parts by mass or more, more preferably 60 parts by mass or more, still more preferably 70 parts by mass or more, and even more preferably 80 parts by mass or more; and specifically less than 100 parts by mass, preferably 95 parts by mass or less, more preferably 90 parts by mass or less, and still more preferably 85 parts by mass or less.

From the viewpoint of improving water repellency of the phenol resin composition, it is preferable that the components (A) and (B) are both solid at 25°C. Here, the "solid at 25°C" specifically means that a melting point is higher than 25°C. That is, the component (A) is specifically a silicone resin which does not have fluidity at 25°C under 1 atmosphere. The melting point is measured according to ISO 3146:2000 by a capillary tube method.

In addition, from the viewpoint of reducing production cost of the phenol resin composition, it is preferable that the phenol resin composition is obtained by pulverizing and mixing the components (A) and (B). That is, the phenol resin composition is preferably a pulverized mixture of the components (A) and (B).

The phenol resin composition may include a component other than the components (A) and (B).

For example, from the viewpoint of making curing properties of the component (B) more preferred, it is preferable that the phenol resin composition further includes a curing agent.

Specifically, the curing agent is one or two or more compounds selected from the group consisting of hexamethylenetetramine and epoxy resins. From the viewpoint of promoting curing of the component (B), the curing agent is preferably hexamethylenetetramine.

From the viewpoint of promoting the curing of the component (B), a content of the curing agent in the phenol resin composition is preferably 2 parts by mass or more, more preferably 5 parts by mass or more, and still more preferably 7 parts by mass or more with respect to 100 parts by mass of the component (B).

In addition, from the viewpoint of suppressing a decrease in strength of the cured product and for example, in a case where the curing agent is hexamethylenetetramine, from the viewpoint of suppressing cracks and blisters in the cured product due to gas generated by a decomposition of the hexamethylenetetramine, the content of the curing agent in the phenol resin composition is preferably 20 parts by mass or less, more preferably 18 parts by mass or less, and still more preferably 17 parts by mass or less with respect to 100 parts by mass of the component (B).

In addition, from the viewpoint of improving strength of the cured product, the phenol resin composition further includes a filler.

Specifically, the filler is one or two or more kinds selected from the group consisting of a fiber base material and a filling agent.

Examples of the fiber base material include inorganic fibers such as steel fiber, copper fiber, glass fiber, ceramic fiber, and potassium titanate fiber, and organic fibers such as aramid fiber.

In order for the obtained cured product to have sufficient material strength for use as the friction material, the fiber base material can be used in an amount of preferably 0.5% by volume or more and more preferably 1% by volume or more with respect to the entire solid content of the phenol resin composition. In addition, the fiber base material can be used in an amount of preferably 20% by volume or less, more preferably 15% by volume or less, still more preferably 10% by volume or less, and even more preferably 5% by volume or less with respect to the entire solid content of the phenol resin composition.

Examples of the filling agent include inorganic filling agents such as calcium carbonate, calcium hydroxide, barium sulfate, mica, abrasive, kaolin, and talc, organic filling agents such as cashew dust and rubber dust, and lubricants such as graphite, antimony trisulfide, molybdenum disulfide, and zinc disulfide.

A content of the filling agent can be appropriately adjusted according to the use of the obtained cured product of the phenol resin composition, particularly the desired wear properties. A content of the filling agent is, for example, 50% by volume or more, preferably 60% by volume or more, more preferably 70% by volume or more, and still more preferably 75% by volume or more with respect to the entire solid content of the phenol resin composition. In addition, the content of the filling agent is, for example, 95% by volume or less, preferably 90% by volume or less and more preferably 85% by volume or less with respect to the entire solid content of the phenol resin composition.

### (Curing catalyst)

In addition, the phenol resin composition may further include a curing catalyst. The curing catalyst is, for example, one or two or more kinds selected from the group consisting of organic phosphine compounds such as triphenylphosphine and tributylphosphine; aromatic carboxylic acids such as benzoic acid and salicylic acid; dicarboxylic acids such as phthalic acid; and basic compounds such as inorganic basic compounds and organic basic compounds.

From the viewpoint of obtaining preferred curing promotion, an amount of the curing catalyst in the phenol resin composition is, for example, preferably 0.1 parts by mass or more and more preferably 0.5 parts by mass or more with respect to 100 parts by mass of the solid content of the phenol resin composition.

In addition, from the viewpoint of suppressing deterioration of fluidity of the composition during molding and obtaining a cured product having better mechanical strength, the amount of the curing catalyst in the phenol resin composition is preferably 5 parts by mass or less and more preferably 3 parts by mass or less with respect to 100 parts by mass of the solid content of the phenol resin composition.

Next, a method for producing the phenol resin composition will be described.

The phenol resin composition can be obtained by, for example, a method which includes a step of preparing a pulverized product of the components (A) and (B) and optionally other components and a step of dry-mixing the pulverized product of the respective components in a predetermined order.

In addition, the phenol resin composition can also be obtained by a method of simultaneously pulverizing and mixing solids of the components (A) and (B) and optionally other components.

The phenol resin composition obtained in the present embodiment can be suitably used for producing friction materials such as a brake pad, a brake lining, and a clutch facing.

### (Friction material)

In the present embodiment, a friction material includes a cured product of the above-described phenol resin composition. In addition, the friction material can be obtained by curing the phenol resin composition.

From the viewpoint of improving water repellency of the friction material, it is preferable that the friction material includes a cured product of a silicone resin having a softening point of 140°C or lower, that is, the component (A) and a cured product of a phenol resin, that is, the component (B), in which the cured product of the silicone resin is present on a periphery of the cured product of the phenol resin.

Next, a method for producing the friction material will be described. The friction material can be produced, for example, by a method including the following steps.

### (Step 1) step of obtaining a mixture including the components (A) and (B)

### (Step 2) step of heating the mixture to a temperature equal to or higher than the softening point to obtain a cured product including a crosslinked product of the component (A)

In the step 1, for example, the mixture can be obtained by pulverizing and mixing the silicone resin as the component (A), the phenol resin as the component (B), and optionally other components.

From the viewpoint of improving the water repellency of the friction material, the step 1 preferably includes a step of pulverizing and mixing the components (A) and (B).

A median diameter of the mixture obtained by pulverizing and mixing is, for example, 5 um or more, preferably 10 um or more and more preferably 20 µm or more, and for example, 100 pm or less, preferably 70 um or less and more preferably 50 um or less.

Specifically, the median diameter of the mixture is a particle diameter at 50% volume-based accumulation in a particle size distribution measured by a laser diffraction method.

In addition, in the step 1, for example, the following steps 1-1 and 1-2 can be performed in the following order.

### (Step 1-1) step of mixing the components (A) and (B) and optional curing agent to obtain a phenol resin composition for a friction material

### (Step 1-2) after the step 1-1, a step of further adding and mixing other components, specifically one or more kinds selected from the filler and the curing catalyst described above to obtain the above-described mixture (composition for a friction material)

In this case, with respect to the entire composition for a friction material, an amount of the phenol resin composition for a friction material, which is blended in the composition for a friction material in the step 1-2, is, for example, 5% by volume or more, preferably 10% by volume or more, and for example, 30% by volume or less, preferably 25% by volume or less and more preferably 20% by volume or less.

In the step 2, the friction material can be produced by thermosetting the mixture. By the thermosetting, since the crosslinked product of the component (A) is formed, and then the crosslinked product is present on the periphery of the component (B), the water repellency of the friction material can be made preferred.

More specifically, the thermosetting conditions are such that the phenol resin composition is filled in a mold, heated and compressed under the conditions of 130°C to 180°C and 10 to 100 MPa for 1 to 20 minutes, preferably 5 to 20 minutes, and then post-cured at 160°C to 250°C as necessary, thereby producing the friction material.

In the present embodiment, the friction material can be suitably used, for example, as a brake pad, a brake lining, a clutch facing, and the like.

The embodiments of the present invention have been described above, but these are examples of the present invention and various configurations other than the above can be adopted.

### EXAMPLES

Hereinafter, the present invention will be described with reference to Examples and Comparative Examples, but the present invention is not limited thereto.

### <Production of resin composition for friction material>

### (Synthesis Example 1: synthesis of phenol resin)

Amixture of 1000 parts of phenol, 570 parts of 37% formalin (molar ratio of formaldehyde to phenol: 0.66), and 10 parts of oxalic acid was reacted at 100°C for 3 hours, the reaction mixture was dehydrated by atmospheric distillation until the temperature of the reaction mixture reached 140°C, and then the reaction mixture was dehydrated and demonomerized by vacuum distillation until the temperature of the reaction mixture reached 220°C while gradually reducing the pressure to 0.9 kPa, thereby obtaining 905 parts of a novolac-type phenol resin. The softening point of the novolac-type phenol resin was 88°C.

### (Examples 1 and 2 and Comparative Examples 1 and 2)

A phenol resin composition for a friction material was prepared using the phenol resin obtained in Synthesis Example 1. Using the phenol resin composition for a friction material of each example, a resin composition for a friction material and a friction material were produced, and water repellency was evaluated.

### (Preparation of phenol resin composition for friction material)

The phenol resin obtained in Synthesis Example 1, a silicone resin, and hexamethylenetetramine were pulverized and mixed in blending amounts shown in Table 1 with a small pulverizer to obtain a thermosetting resin composition having a median diameter of 30 um. Details of the materials used in Table 1 are as follows.
Phenol resin 1: novolac-type phenol resin prepared in Synthesis

### Example 1

Hexamethylenetetramine: trade name "Hexamine" manufactured by Mitsubishi Gas Chemical Trading, Inc.
Silicone resin 1: methylphenyl group-containing silicone resin; softening point: 70°C, non-volatile content: 99% or more
Silicone resin 2: methyl group-containing silicone resin; softening point: 110°C, non-volatile content: 99% or more
Silicone resin 3: TOSPEARL 1100 manufactured by Momentive Performance Materials Japan LLC; methyl group-containing silicone resin; no softening point, non-volatile content: 99% or more

**[Table 1]**

| | | Example 1 | Example 2 | Comparative Example 1 | Comparative Example 2 |
|---|---|---|---|---|---|
| Component (part by mass) | Phenol resin 1 | 1000 | 1000 | 1000 | 1000 |
| | Silicone resin 1 (softening point: 70°C) | 100 | | | |
| | Silicone resin 2 (softening point: 110°C) | | 100 | | |
| | Silicone resin 3 (no softening | | | | 100 |

| | | | | | |
|---|---|---|---|---|---|
| | point) | | | | |
| | Hexamine | 100 | 100 | 100 | 100 |
| Water repellency test of friction material | Contact angle (°) | 103 | 75 | 50 | 50 |

### (Production of friction material)

18% by volume of the phenol resin composition of example as a binder, 2% by volume of aramid fiber (manufactured by DuPont, Kevlar) as a fiber base material, and 40% by volume of calcium carbonate (manufactured by Sankyo Seifun, Calcium carbonate) and 40% by volume of barium sulfate (manufactured by SAKAI CHEMICAL INDUSTRY CO., LTD., Elutriation barium sulfate) as inorganic filling agents were charged and mixed to obtain a resin composition for a friction material.

Using a thermoforming press, the obtained resin composition for a friction material was molded at a temperature of 150°C for a molding time of 4 minutes and at a pressure of 20 MPa to 40 MPa, and then a heat treatment (post-baking) was performed at 200°C for 5 hours to obtain a friction material.

### (Measurement of contact angle)

As an index of water repellency of the friction material, a contact angle of water was measured. A surface of the friction material obtained in each example was polished with #400 abrasive coated paper by approximately 0.5 mm, and subjected to a contact angle measurement. The contact angle of water on the surface of the friction material was measured using Drop Master DM-500 manufactured by Kyowa Interface Science Co., Ltd. The water used for the measurement was ion-exchanged water with a pH of 6 to 8 and a temperature of 25°C. The results are shown in Table 1.

From Table 1, in each example, the water repellency on the surface of the friction material obtained using the phenol resin composition was excellent.

Priority is claimed on Japanese Patent Application No. 2020-095929, filed June 2, 2020, the disclosure of which is incorporated herein by reference.

## Claims

1. A phenol resin composition for a friction material, comprising:
a component (A) of a silicone resin having a softening point of 140°C or lower; and
a component (B) of a phenol resin.

2. The phenol resin composition for a friction material according to claim 1,
wherein a content of the component (A) in the phenol resin composition for a friction material is 1 part by mass or more and 500 parts by mass or less with respect to 100 parts by mass of the component (B) .

3. The phenol resin composition for a friction material according to claim 1 or 2,
wherein the components (A) and (B) are both solid at 25°C.

4. The phenol resin composition for a friction material according to claim 3,
wherein the phenol resin composition for a friction material is obtained by pulverizing and mixing the components (A) and (B).

5. The phenol resin composition for a friction material according to any one of claims 1 to 4, further comprising:
a curing agent.

6. The phenol resin composition for a friction material according to any one of claims 1 to 5, further comprising:
a filler.

7. A friction material comprising:
a cured product of the phenol resin composition for a friction material according to any one of claims 1 to 6.

8. A friction material comprising:
a cured product of a silicone resin having a softening point of 140°C or lower; and
a cured product of a phenol resin,
wherein the cured product of the silicone resin is present on a periphery of the cured product of the phenol resin.

9. A method for producing a friction material, comprising:
a step of obtaining a mixture including a component (A) of a silicone resin having a softening point of 140°C or lower and a component (B) of a phenol resin; and
a step of heating the mixture to a temperature equal to or higher than the softening point to obtain a cured product including a crosslinked product of the component (A).
